# FASCICULE DE BREVET EUROPEEN

(11) **EP 2 963 579 B1**
(45) Date de publication et mention de la délivrance du brevet: **13.09.2017**
(21) Numéro de dépôt: 15169536.8
(22) Date de dépôt: 28.05.2015
(51) Int. Cl.: H04L 9/32, H04L 29/06, G06F 21/57

(54) **PROCÉDÉ DE GESTION DE L'INSTALLATION D'UNE APPLICATION SUR UN DISPOSITIF ÉLECTRONIQUE**
STEUERUNGSVERFAHREN DER INSTALLATION EINER ANWENDUNG AUF EINER ELEKTRONISCHEN VORRICHTUNG
METHOD FOR MANAGING THE INSTALLATION OF AN APPLICATION ON AN ELECTRONIC DEVICE

(30) Priorité: 04.07.2014 FR 1456498
(43) Date de publication de la demande: 06.01.2016
(73) Titulaire: Schneider Electric Industries SAS, 92500 Rueil-Malmaison (FR)
(72) Inventeur: Moulin, Michel, 38050 GRENOBLE Cedex 09 (FR)
(74) Mandataire: Lavoix

(56) Documents cités:
- EP-A1- 2 744 244
- US-A1- 2007 055 881
- US-A1- 2007 214 453

## Description

La présente invention concerne un procédé de gestion de l'installation d'une application logicielle sur un dispositif électronique. L'invention se rapporte également à un procédé de génération d'un pack logiciel et au produit programme d'ordinateur associé. L'invention concerne également un dispositif électronique.

Les dispositifs électroniques ont de plus en plus fréquemment recours à des applications embarquées. Un automate programmable ou un disjoncteur sont deux exemples de tels dispositifs électroniques.

Les applications embarquées ont besoin périodiquement d'une mise à jour, notamment lorsque des améliorations de l'application apparaissent ou que des défauts sont corrigés. Lors de l'installation d'une nouvelle version d'une application sur un dispositif électronique, il importe de vérifier que la nouvelle version convient pour le dispositif électronique considéré et que la nouvelle version a été générée par une entreprise habilitée (un fournisseur agréé ou le fabricant du dispositif électronique). En effet, l'installation d'une version modifiée par un tiers malveillant est susceptible d'empêcher le fonctionnement du dispositif, voire pire d'entraîner un fonctionnement du dispositif dangereux pour l'utilisateur.

Il est donc souhaitable de mettre à jour les applications d'un dispositif électronique en authentifiant avec assurance la provenance de toute mise à jour.

Pour cela, il est connu d'utiliser des signatures électroniques présentes dans la mise à jour de l'application, le dispositif électronique étant pourvu de moyens d'identification de signatures électroniques spécifiques. A titre d'exemple, le document EP-A-2 402 879 décrit un outil applicatif permettant de générer une signature du de l'application comprenant un générateur de code pour la production d'un code binaire, un générateur de certificats séparés des codes binaires et une plateforme associant au moins un certificat à au moins un code binaire pour faciliter la mise à jour des applications embarquées dans un dispositif électronique.

Le document US 2007/055881 A1 décrit un procédé permettant de remplacer un certificat par un nouveau certificat suite à la vérification des signatures rattachées audit nouveau certificat. Les documents EP 2 744 244 A1 (alinéa 69) et US 2007/214453 (alinéa 162) divulguent une authentification d'application basée sur l'utilisation d'une pluralité de certificats. Afin que l'authentification réussisse, il suffit qu'au moins une des signatures associées corresponde à la signature de l'application. Toutefois, l'industrie cherchant à minimiser les pertes d'exploitation, les dispositifs électroniques sont mis à jour peu fréquemment, par exemple pendant plusieurs années de fonctionnement. De ce fait, lorsque le dispositif électronique n'a pas été mis à jour depuis longtemps et que plusieurs versions de la signature de l'application ont été créées dans l'intervalle, les moyens d'identification du dispositif électronique sont capables d'identifier seulement des signatures électroniques qui sont devenues obsolètes. Le document précité ne permet pas de gérer efficacement une telle situation.

Il existe donc un besoin pour un procédé de gestion de l'installation d'une application logicielle sur un dispositif électronique garantissant une installation sécurisée, y compris dans le cas où les moyens d'identification du dispositif électronique sont capables d'identifier seulement des signatures électroniques qui sont devenues obsolètes.

A cet effet, il est proposé un procédé de gestion de l'installation d'une application logicielle sur un dispositif électronique. Le dispositif électronique comporte une mémoire dans laquelle est mémorisée une clé publique d'authentification d'application et une clé publique d'authentification de certificat. Le pack logiciel comporte une application logicielle comprenant au moins un code exécutable. Le pack logiciel comporte aussi une première signature d'authentification de l'application obtenue par un codage asymétrique utilisant une première clé privée de cryptage. Le pack logiciel comporte également un certificat comprenant des informations. Le pack logiciel comprend aussi une deuxième signature d'authentification du certificat, la deuxième signature étant un ensemble d'au moins une deuxième sous-signature d'authentification du certificat, chaque deuxième sous-signature étant obtenue par un codage asymétrique utilisant chacun une deuxième clé privée de cryptage respective, au moins une des deuxièmes clés privées de cryptage étant distincte de la première clé privée de cryptage. Le procédé comprend une étape de recherche de l'authenticité de la deuxième signature à l'aide de la clé publique d'authentification du certificat, le certificat étant authentifié si au moins une des deuxièmes sous-signatures est considérée comme authentique lors de la mise en oeuvre de l'étape de recherche.

Le procédé de gestion de l'installation d'une application logicielle sur un dispositif électronique garantit donc une installation sécurisée, y compris dans le cas où les moyens d'identification du dispositif électronique sont capables d'identifier seulement des signatures électroniques qui sont devenues obsolètes.

Suivant des modes de réalisation particuliers, le procédé d'installation comprend une ou plusieurs des caractéristiques suivantes, prise(s) isolément ou suivant toute combinaison techniquement possible :
- au moins une des deuxièmes clés privées de cryptage est associée à la clé publique d'authentification du certificat.
- l'étape de recherche est uniquement mise en oeuvre lorsque la première signature est considérée comme non authentique en utilisant la clé publique d'authentification d'application.
- le procédé comporte en outre l'étape de renouvellement de la clé publique d'authentification d'application du dispositif électronique et de la clé publique d'authentification du certificat du dispositif électronique.
- les informations du certificat comportent une première clé publique associée à la première clé privée de cryptage et l'application comporte une deuxième clé publique associée à une deuxième clé privée de cryptage, la nouvelle clé publique d'authentification d'application obtenue à l'issue de l'étape de renouvellement étant la première clé publique et la nouvelle clé publique d'authentification du certificat obtenue à l'issue de l'étape de renouvellement étant la deuxième clé publique.
- le procédé comporte, en outre, une étape d'authentification de l'application par vérification de l'authenticité de la première signature à l'aide de la nouvelle clé publique d'authentification d'application.
- l'installation de l'application est refusée lorsqu'au moins l'un du certificat et de l'application est considéré comme non authentique.

Il est également proposé un procédé de génération d'un pack logiciel comprenant une étape de fourniture d'une application comprenant au moins un exécutable, d'une première clé privée de cryptage, d'un certificat comprenant des informations et d'au moins une deuxième clé privée de cryptage, au moins une des deuxièmes clés privées de cryptage étant distincte de la première clé privée de cryptage. Le procédé de génération comporte aussi une étape de génération d'une première signature d'authentification de l'application à l'aide d'un codage asymétrique utilisant la première clé privée de cryptage, et une étape de génération d'une deuxième signature d'authentification du certificat, la deuxième signature étant un ensemble d'au moins une deuxième sous-signature d'authentification du certificat, l'étape de génération de la deuxième signature comprenant l'obtention de chaque deuxième sous-signature par utilisation d'un cryptage asymétrique à l'aide d'une deuxième clé privée de cryptage respective.

Il est également proposé un produit programme d'ordinateur comportant des instructions logicielles qui, lorsque les instructions logicielles sont exécutées par un ordinateur mettent en oeuvre un procédé de génération tel que précédemment décrit.

Il est aussi proposé un dispositif électronique comportant une mémoire dans laquelle est mémorisée une clé publique d'authentification de certificat et une clé publique d'authentification d'application, la clé publique d'authentification du certificat et la clé publique d'authentification d'application étant distinctes.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un exemple de disjoncteur comprenant une pluralité de dispositifs électroniques,
- figure 2, une représentation schématique d'un exemple d'un pack logiciel selon un premier mode de réalisation,
- figure 3, un organigramme d'un exemple de mise en oeuvre d'un procédé de génération permettant de générer le pack logiciel de la figure 2,
- figure 4, un organigramme d'un exemple de mise en oeuvre d'un procédé d'installation selon un premier mode de réalisation,
- figure 5, une représentation schématique d'un exemple de pack logiciel selon un deuxième mode de réalisation,
- figure 6, un organigramme d'un exemple de mise en oeuvre d'un procédé de génération permettant de générer le pack logiciel de la figure 5, et
- figure 7, un organigramme d'un exemple de mise en oeuvre d'un procédé d'installation selon un premier mode de réalisation.

Par convention, dans la suite de la description, un module s'entend au sens large, et est synonyme de moyen.

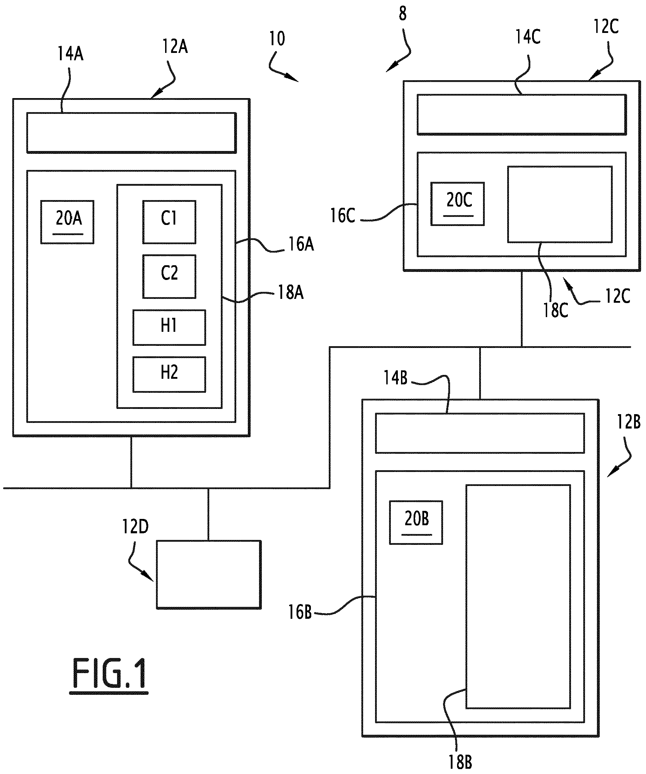

Sur la figure 1, un disjoncteur électrique 8 comprend une unité de déclenchement, non représentée, et un système électronique 10. L'unité de déclenchement est connue en soi, et n'est pas décrite plus en détail.

Le système électronique 10 comprend quatre dispositifs électroniques 12A, 12B, 12C, 12D, à savoir un premier dispositif 12A, un deuxième dispositif 12B, un troisième dispositif 12C et un quatrième 12D, et un bus de communication 13 reliant entre eux les dispositifs électroniques 12A, 12B, 12C, 12D.

Les dispositifs électroniques 12A, 12B, 12C, 12D sont, par exemple, un dispositif d'interface homme-machine, également noté FDM (en anglais *Front Display Module*), un dispositif d'interface réseau, par exemple un dispositif d'interface avec un réseau Modbus, également noté IFM (en anglais *Interface Modbus*), un dispositif d'interface avec l'unité de déclenchement du disjoncteur 8, tel qu'un dispositif noté BCM (en anglais *Breaker Control Module*) ou encore un dispositif noté BSCM (en anglais *Breaker Status Control Module*)*.* Les dispositifs électroniques 12A, 12B, 12C, 12D sont également, par exemple, un dispositif de maintenance, également noté UTA (en anglais *USB Tool Adaptator*) ou BU (en anglais *Base unit*) et un dispositif d'entrées/sorties, également noté I/O Module (en anglais *Input*/*Output Module*).

Le premier dispositif électronique 12A est, selon l'exemple de la figure 1, le dispositif de maintenance UTA tandis que le deuxième dispositif électronique 12B est un dispositif d'interface homme-machine FDM, le troisième dispositif électronique 12C est un dispositif d'interface réseau IFM et le quatrième dispositif électronique 12D est un dispositif d'interface BCM avec l'unité de déclenchement du disjoncteur électrique 8.

Le premier dispositif électronique 12A comporte un premier module 14A de communication avec un ou plusieurs dispositifs électroniques 12B, 12C, 12D de l'ensemble. Le premier dispositif électronique 12A comporte également une première unité de traitement d'informations 16A formée par exemple par une première mémoire 18A et d'un premier processeur 20A associée à la première mémoire 18A.

Le deuxième dispositif électronique 12B, respectivement le troisième dispositif électronique 12C et respectivement le quatrième dispositif électronique 12D comportent les mêmes éléments que le premier dispositif électronique 12A décrit précédemment, en remplaçant à chaque fois premier par deuxième, respectivement par troisième et respectivement par quatrième, éléments pour lesquels les références sont obtenues en remplaçant la lettre A par la lettre B, respectivement par la lettre C et respectivement par la lettre D. Sur la figure 1, les éléments contenus dans le quatrième dispositif électronique 12D n'ont pas été représentés par souci de simplification des dessins.

Chaque dispositif électronique 12A, 12B, 12C, 12D comporte une ou plusieurs fonctions matérielles et/ou logicielles non représentées.

Il est entendu par fonction matérielle, toute fonction mise en oeuvre par un composant matériel (en anglais *hardware*), c'est-à-dire par un composant électronique ou par un ensemble de composants électroniques. Chaque composant électronique est, par exemple, une mémoire électronique adaptée pour mémoriser des données, un composant d'entrées/sorties, un composant d'interface avec une liaison de communication, telle qu'une liaison série, une liaison USB, une liaison Ethernet, une liaison Wifi ou autres. A titre d'exemple supplémentaire, un composant électronique est un composant logique programmable, également appelé FPGA (en anglais *Field Programmable Gate Array*), ou encore un circuit intégré dédié, également appelé ASIC (en anglais *Application Specific Integrated Circuit*) ou tout autre composant électronique, programmable ou non.

Il est entendu par fonction logicielle, toute fonction mise en oeuvre par un composant logiciel, qu'il s'agisse d'un logiciel de base (en anglais *firmware*) ou encore d'un logiciel applicatif (en anglais *software*). Une fonction logicielle s'entend ainsi au sens large comme un ensemble d'instructions logicielles aptes à mettre en oeuvre ladite fonction logicielles lorsque les instructions logicielles sont exécutées par un processeur.

Dans la suite, le premier dispositif électronique 12A est plus spécifiquement considéré, sachant que l'invention proposée s'applique également aux autres dispositifs électroniques 12B, 12C, 12D.

Le bus de communication 13 est, par exemple, un bus filaire, interne au disjoncteur 8 et reliant les dispositifs électroniques 12A, 12B, 12C, 12D. Le bus 13 est adapté pour permettre un échange de données entre les dispositifs électroniques 12A, 12B, 12C, 12D. Les modules de communication 14A, 14B, 14C, 14D sont alors des modules d'interfaçage avec le bus de communication 13.

En variante, non représentée, le bus de communication 13 est en forme d'une liaison radioélectrique de données, et les modules de communication 14A, 14B, 14C, 14D sont alors des modules radioélectriques de communication.

La première mémoire 18A est propre à mémoriser une clé publique C1 d'authentification d'application et une première fonction de hachage H1.

La première mémoire 18A est également propre à mémoriser une clé publique C2 d'authentification de certificat et une deuxième fonction de hachage H2.

La clé publique C2 d'authentification du certificat et la clé publique C1 d'authentification d'application sont distinctes.

De préférence, la deuxième fonction de hachage H2 est distincte de la première fonction de hachage H1. Cela permet d'augmenter la sécurité lors de l'installation d'une application.

Le premier processeur 20A est, pour le cas du premier dispositif électronique 12A, propre à exécuter une amorce (en anglais *boot*). Dans le cas où le premier dispositif électronique 12A supporte de multiples applications, une amorce est capable d'isoler l'application à installer des autres applications déjà installées. Cela permet de protéger le premier dispositif électronique 12A si une application à installer sur le premier dispositif électronique 12A s'avère être une application malveillante.

L'amorce exécutée par le premier processeur 20A est propre à authentifier une application en utilisant la clé publique C1 d'authentification d'application

L'amorce exécutée par le premier processeur 20A est également propre à authentifier un certificat en utilisant clé publique C2 d'authentification du certificat.

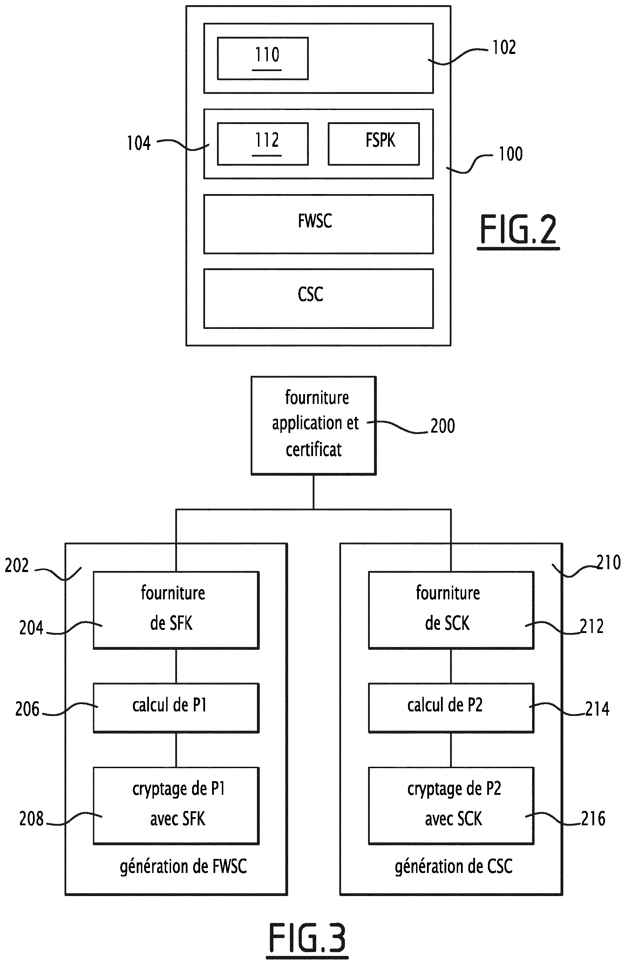

L'amorce exécutée par le premier processeur 20A est aussi propre à procéder à l'installation d'une application logicielle. L'amorce exécutée par le premier processeur 20A est ainsi propre à gérer l'installation d'une application faisant partie d'un pack logiciel 100 tel que représenté schématiquement à la figure 2.

Le pack logiciel 100 comporte une application 102, un certificat 104, une première signature FWSC (en anglais *Firmware Signature Code*) d'authentification de l'application 102 et une deuxième signature CSC (en anglais *Certificate Signature Code*) d'authentification du certificat 104.

Selon une autre variante, le pack logiciel 100 comprend une pluralité d'applications 102 et une première signature relative à certaines applications spécifiques 102. Toutefois, comme ce cas se ramène au cas d'un module d'extension, il n'est pas plus décrit dans ce qui suit.

Selon l'exemple de la figure 2, l'application 102 est un logiciel de base.

En variante, l'application 102 est un module d'extension (en anglais *add-on* ou *plugin*)*.*

L'application 102 comporte un ensemble de données. Dans le cas illustré par la figure 2, les données de l'application 102 sont un fichier d'exécution 110. Le fichier d'exécution 110 comporte l'ensemble des codes exécutables assurant le bon fonctionnement de l'application 102.

Dans le cas de la figure 2, l'ensemble des données de l'application 102 ne sont pas cryptées. En variante, l'ensemble des données de l'application 102 sont cryptées.

Le certificat 104 comporte également un ensemble de données. Dans le cas illustré par la figure 2, les données du certificat 104 sont les données 112 relatives au fournisseur du pack logiciel 100 et une première clé publique FSPK. La première clé publique FSPK permet de décrypter la première signature FWSC.

Dans le cas de la figure 2, l'ensemble des données du certificat 104 ne sont pas cryptées. En variante, l'ensemble des données du certificat 104 sont cryptées.

La première signature FWSC et la deuxième signature CSC sont générées de manière similaire (codage asymétrique) mais à partir de clés privés distinctes. Pour illustrer plus spécifiquement une telle caractéristique, il est fait référence à la figure 3 montrant un organigramme d'un exemple de mise en oeuvre d'un exemple de procédé de génération du pack logiciel 100.

Le procédé de génération comporte une étape 200 de fourniture de l'application 102 et du certificat 104.

Le procédé de génération comporte une première étape 202 de génération. A la première étape 202 de génération, la première signature FWSC d'authentification de l'application 102 est générée.

La première étape 202 de génération comporte une première sous-étape 204 de fourniture, une première sous-étape 206 de calcul et une première sous-étape 208 de cryptage.

A la première sous-étape 204 de fourniture, il est fourni une première clé privée SFK (de l'anglais *Secret Firmware Key*)*.*

A la première sous-étape 206 de calcul, la première fonction de hachage H1 est appliquée à l'application 102 pour obtenir une première valeur de calcul P1.

A la première sous-étape 208 de cryptage, la première valeur de calcul P1 obtenue à l'issue de la première sous-étape 206 de calcul est cryptée à l'aide de la première clé privée SFK fournie par une infrastructure de gestion de clés.

L'ensemble des premières sous-étapes 206 de calcul et 208 de cryptage permet de réaliser un codage asymétrique utilisant la première clé privée SFK.

Ainsi, la première signature FWSC est obtenue par un codage asymétrique utilisant la première clé privée SFK. Comme expliqué précédemment, la première signature FWSC est décryptable en utilisant la première clé publique FSPK, la première clé publique FSPK étant associée à la première clé privée SFK.

Le procédé de génération comporte une deuxième étape 210 de génération. A la deuxième étape 210 de génération, la deuxième signature CSC d'authentification du certificat 104 est générée.

De préférence, comme c'est le cas dans l'exemple de la figure 3, pour diminuer le temps de mise en oeuvre du procédé de génération, les deux étapes 202 et 210 de génération sont mises en oeuvre simultanément.

La deuxième étape 210 de génération comporte une deuxième sous-étape 212 de fourniture, une deuxième sous-étape 214 de calcul et une deuxième sous-étape 216 de cryptage.

A la deuxième sous-étape 212 de fourniture, il est fourni une deuxième clé privée SCK (de l'anglais *Secret Certificate Key*)*.*

A la deuxième sous-étape 214 de calcul, la deuxième fonction de hachage H2 est appliquée au certificat 104 pour obtenir une deuxième valeur de calcul P2.

A la deuxième sous-étape 216 de cryptage, la deuxième valeur de calcul P2 obtenue à l'issue de la deuxième sous-étape 214 de calcul est cryptée à l'aide de la deuxième clé privée SCK fournie.

L'ensemble des deuxièmes sous-étapes 214 de calcul et 216 de cryptage permet de réaliser un codage asymétrique utilisant la deuxième clé privée SCK.

Ainsi, la deuxième signature CSC est obtenue par un codage asymétrique utilisant la deuxième clé privée SCK. Une deuxième clé publique FMPK associée à la deuxième clé privée SCK permet de décrypter la deuxième signature CSC.

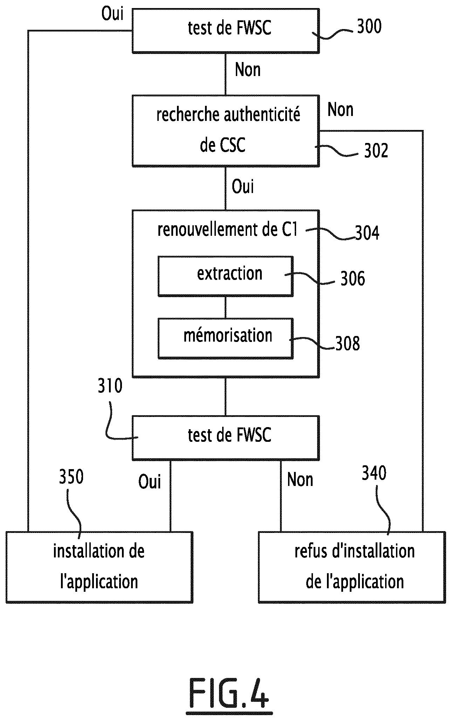

Le fonctionnement du premier dispositif électronique 12A dans le cas de l'installation de l'application 102 est décrit en référence à la figure 4 qui illustre un exemple de mise en oeuvre de procédé de gestion de l'installation de l'application 102 sur le premier dispositif électronique 12A.

Il est entendu par installation aussi bien l'ajout d'une application non présente sur le premier dispositif électronique 12A que la modification d'une ancienne version de l'application logicielle par une mise à jour.

Le procédé de gestion comporte une première étape 300 de test de la première signature FWSC à l'aide de la clé publique C1 d'authentification d'application.

Pour authentifier la première signature FWSC, le premier processeur 20A du premier dispositif électronique 12A extrait la première fonction de hachage H1 de la première mémoire 18A, puis applique la première fonction de hachage H1 à l'application 102. Le premier processeur 20A obtient ainsi une première valeur V1.

Le premier processeur 20A du premier dispositif électronique 12A extrait également la clé publique C1 d'authentification d'application mémorisée dans la première mémoire 18A. Puis, le premier processeur 20A décrypte la première signature FWSC à l'aide de la clé publique C1 d'authentification d'application. Le premier processeur 20A obtient ainsi une deuxième valeur V2.

Il est possible de démontrer que la première signature FWSC et l'application 102 sont authentiques uniquement dans le cas où la première valeur V1 et la deuxième valeur V2 sont égales.

Le premier processeur 20A du premier dispositif électronique 12A compare donc la première valeur V1 et la deuxième valeur V2. Si les deux valeurs V1, V2 sont égales, le premier processeur 20A du premier dispositif électronique 12A authentifie la première signature FWSC alors que si les deux valeurs V1, V2 sont différentes, le premier processeur 20A du premier dispositif électronique 12A n'authentifie pas la première signature.

Dans le cas où la première signature FWSC est authentifiée, la provenance de l'application 102 est assurée et le procédé de gestion comporte ensuite une étape 350 d'installation de l'application 102.

Dans le cas contraire, cela montre que la clé publique C1 d'authentification d'application FSPK ne permet pas d'authentifier la nouvelle application 102.

Le procédé de gestion comporte alors une étape 302 de recherche de l'authenticité de la deuxième signature CSC à l'aide de la clé publique C2 d'authentification du certificat.

La mise en oeuvre de l'étape 302 de recherche par le premier processeur 20A est similaire à la mise en oeuvre de l'étape 300 de test et n'est donc pas décrite plus spécifiquement dans ce qui suit.

Dans le cas où la deuxième signature CSC n'est pas considérée comme authentique lors de la mise en oeuvre de l'étape 302 de recherche, le certificat 104 n'est pas authentifié. Cela signifie que le certificat 104 ne provient pas d'une source sure.

De ce fait, le procédé comporte une étape 340 de refus de l'installation de l'application 102 pour protéger le premier dispositif électronique 12A.

Au contraire, lorsque la deuxième signature CSC est considérée comme authentique, le certificat 104 est authentifié. Cela montre que la clé publique C1 d'authentification d'application ne permet plus d'authentifier la nouvelle application 102, et plus spécifiquement la première signature FWSC.

Le procédé de gestion comporte alors une étape 304 de renouvellement de la clé publique C1 d'authentification d'application du premier dispositif électronique 10A.

L'étape 304 de renouvellement comporte une sous-étape 306 d'extraction et une sous-étape 308 de mémorisation.

A la sous-étape 306 d'extraction, la première clé publique FSPK contenue dans les données du certificat 104 est lue puis extraite. La sous-étape 306 d'extraction est mise en oeuvre par le premier processeur 20A.

Lors de la sous-étape 308 de mémorisation, la première clé publique FSPK remplace l'ancienne clé publique C1 d'authentification d'application.

Le procédé de gestion comporte aussi une deuxième étape 310 de test de l'authenticité de la première signature FWSC à l'aide de la nouvelle clé publique FSPK d'authentification d'application.

Dans le cas où la première signature FWSC n'est pas considérée comme authentique lors de la mise en oeuvre de la deuxième étape 310 de test, l'application 102 n'est pas authentifiée. Cela signifie que l'application 102 ne provient pas d'une source sure. De ce fait, l'étape 340 de refus de l'installation de l'application 102 pour protéger le premier dispositif électronique 12A est, ensuite, mise en oeuvre.

Au contraire, dès que la première signature FWSC est considérée comme authentique, l'application 102 est authentifiée. L'étape 350 d'installation de l'application 102 est alors mise en oeuvre.

Le procédé de gestion permet alors de s'assurer que l'ensemble du pack logiciel 100 a bien été généré par une entreprise habilitée (un fournisseur agréé ou le fabricant du premier dispositif électronique 12A).

Le procédé de gestion permet également de garantir que le pack logiciel 100 n'a pas été modifié par un tiers.

Le procédé de gestion permet également le renouvellement de la clé publique d'authentification d'application du premier dispositif électronique 10A.

Dans un tel mode de réalisation, la deuxième clé privée SCK reste la même tout au long de la durée de vie du premier dispositif électronique 12A. Une telle condition est peu pratique lorsque le fabricant du premier dispositif électronique 12A est distinct du fournisseur du pack logiciel 100.

Pour cela, il est également proposé un deuxième mode de réalisation permettant un changement pour la deuxième clé privée SCK.

Le deuxième mode de réalisation du procédé de gestion est décrit en référence aux figures 1, 5, 6 et 7.

Le premier dispositif électronique 12A est identique dans les deux modes de réalisation.

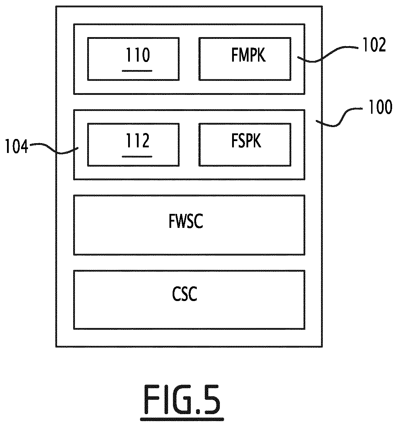

Les éléments similaires entre le pack logiciel 100 selon le premier mode de réalisation et le pack logiciel 100 selon le deuxième mode de réalisation illustré par la figure 5 ne sont pas répétés dans ce qui suit. Seules les différences sont mises en évidence.

Dans le cas de la figure 5, les données de l'application 102 comprennent, en plus du fichier d'exécution 110, la deuxième clé publique FSPK.

En outre, la deuxième signature CSC du certificat 104 n'est plus une signature unique mais un ensemble de deuxièmes sous-signatures notée génériquement CSCi, i faisant référence à un nombre entier supérieur à 1. La deuxième clé publique FSPK est, dans un tel cas, une clé permettant de déchiffrer une des deuxièmes sous-signatures CSCi.

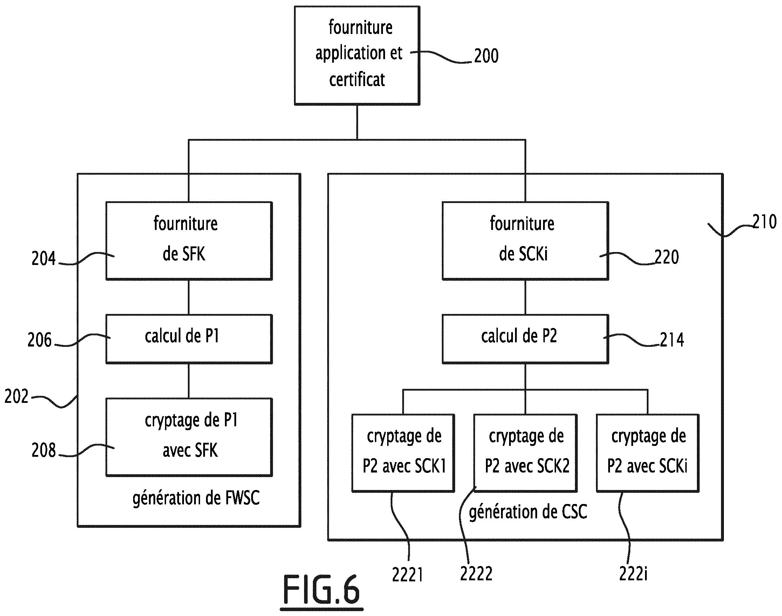

La génération de la deuxième signature CSC est détaillée en référence à la figure 6 montrant un organigramme d'un exemple de mise en oeuvre d'un exemple de procédé de génération du pack logiciel 100 selon le deuxième mode de réalisation. Seule la deuxième étape 210 de génération est plus spécifiquement décrite, les autres étapes demeurant inchangés par rapport au procédé de génération décrit en référence à la figure 3.

A la deuxième étape 210 de génération, la deuxième signature CSC d'authentification du certificat 104 est générée.

La deuxième étape 210 de génération comporte une sous-étape 220 de fourniture d'un ensemble de clés privées de cryptage SCKi, i faisant référence à un nombre entier supérieur à 1.

Les clés privées de cryptage SCKi fournies correspondent à l'ensemble des clés privées SCKi qui ont existées pour le premier dispositif électronique 12A. Cela signifie qu'au moins une des deuxièmes clés privées de cryptage SCKi est associée à la clé publique C2 d'authentification du certificat 104. Dans la suite, il est supposé que c'est la deuxième clé de cryptage notée SCK2 qui est associée à la clé publique C2 d'authentification du certificat 104.

La deuxième étape 210 de génération comporte ensuite la sous-étape 214 de calcul durant laquelle la deuxième fonction de hachage H2 est appliquée au certificat 104 pour obtenir la deuxième valeur de calcul P2

La deuxième étape 210 de génération comporte alors, pour chaque deuxième sous-signature CSCi, une sous-étape 222i de cryptage de la deuxième valeur de calcul P2 à l'aide de la deuxième clé privée SCKi respective fournie pour obtenir la deuxième sous-signature CSCi.

Chaque sous-étape 222i est, de préférence, mise en oeuvre en parallèle. Cela est représenté schématiquement sur la figure 6 par mention des étapes 2221, 2222 et 222i.

Ainsi, la deuxième signature CSC est obtenue par un codage asymétrique utilisant l'ensemble des deuxièmes clés privées SCKi. La deuxième clé publique FMPK associée à l'une des deuxièmes clés privées SCK, comme la clé publique C2 d'authentification du certificat 104 permettent de décrypter au moins une des deuxièmes sous-signatures CSCi.

De préférence, les deuxièmes sous-signatures CSCi sont ordonnées selon un ordre prédéfini, généralement de la plus récente à la plus ancienne mais d'autres ordres sont envisageables.

Selon un cas particulier, la deuxième clé publique FMPK est associée à la deuxième clé privée SCKi la plus récente.

Selon un autre cas particulier correspondant au cas d'un dispositif électronique 12A ancien, la deuxième clé publique FMPK est associée à la deuxième clé privée SCKi la plus ancienne.

En outre, selon un mode de réalisation préféré, chaque deuxième clé privée de cryptage SCKi est distincte de la première clé privée de cryptage SFK pour garantir une sécurité optimum.

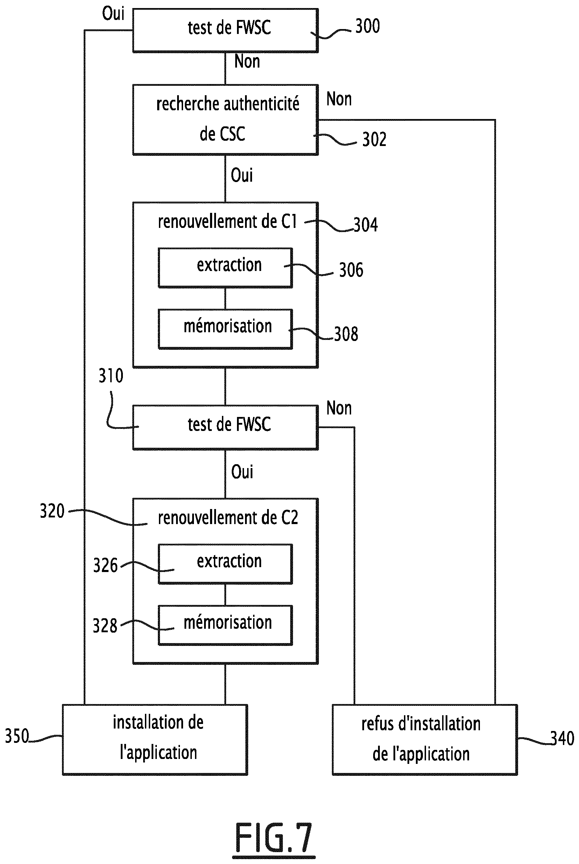

Le procédé de gestion est également modifié dans le deuxième mode de réalisation ainsi que le montre la figure 7.

L'étape 302 de recherche de l'authenticité de la deuxième signature CSC à l'aide de la clé publique C2 d'authentification du certificat est différente dans le cas du deuxième mode de réalisation.

En effet, dans le cas général, une pluralité de deuxièmes sous-signatures CSCi sont testées successivement jusqu'à ce qu'au moins une deuxième sous-signature CSCi soit authentifiée.

En l'occurrence, par exemple, la deuxième sous-signature CSC1 est écartée car considérée comme non authentique. La deuxième sous-signature CSC2 est ensuite testée et validée.

La deuxième signature CSC n'est pas validée si aucune des deuxièmes sous-signatures CSCi ne peut être validée.

En outre, selon le deuxième mode de réalisation, le procédé de gestion comporte alors une étape 320 de renouvellement de la clé publique C2 d'authentification du certificat 104 du premier dispositif électronique 12A.

L'étape 320 de renouvellement comporte une sous-étape 326 d'extraction et une sous-étape 328 de mémorisation.

A la sous-étape 326 d'extraction, la deuxième clé publique FMPK contenue dans les données de l'application 102 est lue puis extraite. La sous-étape 326 d'extraction est mise en oeuvre par le premier processeur 20A.

Lors de la sous-étape 328 de mémorisation, la deuxième clé publique FMPK remplace l'ancienne clé publique C2 d'authentification du certificat 104.

Une telle mémorisation permet d'authentifier les futurs certificats.

Le procédé de gestion selon le deuxième mode de réalisation présente les mêmes avantages que le procédé de gestion selon le premier mode de réalisation. En outre, le procédé de gestion selon le deuxième mode de réalisation permet une utilisation plus souple des clés privées, les clés privées pouvant varier au cours du cycle de vie du premier dispositif électronique 12A.

De plus, le procédé de gestion s'applique à tout type de dispositif électronique susceptible d'être mise à jour par l'installation d'une application logicielle. Ainsi, bien que le procédé de gestion ait été illustré pour une application au premier dispositif électronique 12A, le procédé de gestion s'applique également aux autres dispositifs électroniques 12B, 12C et 12D.

De manière additionnelle, le premier dispositif électronique 12A peut faire partie d'autres systèmes qu'un disjoncteur. Notamment, le premier dispositif électronique 12A peut faire partie d'un automate programmable, d'un variateur de vitesse, d'un onduleur ou d'une alimentation sans interruption de type UPS.

## Revendications

1. Procédé de gestion de l'installation d'une application logicielle (102) sur un dispositif électronique (12A, 12B, 12C, 12D) comportant une mémoire (18A, 18B, 18C, 18D) dans laquelle est mémorisée une clé publique d'authentification d'application (C1) et une clé publique d'authentification de certificat (C2), l'installation logicielle faisant partie d'un pack logiciel (100) comportant :
- l'application (102) comprenant au moins un exécutable,
- une première signature (FWSC) d'authentification de l'application (102), la première signature (FWSC) ayant été obtenue par un codage asymétrique utilisant une première clé privée (SFK) de cryptage,
- un certificat (104) comprenant des informations, et
- une deuxième signature (CSC) d'authentification du certificat (104), la deuxième signature étant un ensemble comprenant des deuxièmes sous-signatures (CSC, CSCi) d'authentification du certificat, chaque deuxième sous-signature (CSC, CSCi) étant obtenue par un codage asymétrique utilisant chacun une deuxième clé privée de cryptage respective (SCK, SCKi), au moins une des deuxièmes clés privées de cryptage (SCK, SCKi) étant distincte de la première clé privée (SFK) de cryptage,
le procédé comprenant le test de la première signature (FWSC) d'authentification de l'application (102) à l'aide de la clé publique d'authentification d'application (C1) et :
- l'installation de l'application (102), lorsque la première signature (FWSC) est considérée comme authentique, ou
- lorsque la première signature (FWSC) d'authentification de l'application est considérée comme non authentique, le procédé comprend en outre au moins :
o recherche de l'authenticité de la deuxième signature (CSC) d'authentification du certificat à l'aide de la clé publique d'authentification du certificat (C2), le certificat (104) étant authentifié si au moins une des deuxièmes sous-signatures (CSC, CSCi) est considérée comme authentique lors de la mise en oeuvre de l'étape de recherche,
o le renouvellement de la clé publique d'authentification d'application (C1) lorsque la deuxième signature (CSC) d'authentification du certificat est considérée comme authentique,
o l'installation de l'application (102), lorsqu'à l'aide de la nouvelle clé publique d'authentification d'application, la première signature (FWSC) d'authentification de l'application (102) est considérée comme authentique.

2. Procédé de gestion selon la revendication 1, dans lequel au moins une des deuxièmes clés privées (SCK, SCKi) de cryptage est associée à la clé publique d'authentification du certificat (C2).

3. Procédé de gestion selon l'une quelconque des revendications 1 à 2, dans lequel le procédé comporte, en outre, une étape de renouvellement de la clé publique d'authentification du certificat (C2) du dispositif électronique (12A, 12B, 12C, 12D).

4. Procédé de gestion selon la revendication 3, dans lequel les informations du certificat (104) comportent une première clé publique (FSPK) associée à la première clé privée de cryptage (SFK) et l'application (102) comporte une deuxième clé publique (FMPK) associée à une deuxième clé privée de cryptage (SCK), la nouvelle clé publique d'authentification d'application obtenue à l'issue de l'étape de renouvellement étant la première clé publique (FSPK) et la nouvelle clé publique d'authentification du certificat obtenue à l'issue de l'étape de renouvellement étant la deuxième clé publique (FMPK).

5. Procédé de gestion selon la revendication 4, dans lequel le procédé comporte en outre une étape d'authentification de l'application (102) par vérification de l'authenticité de la première signature (FWSC) à l'aide de la nouvelle clé publique d'authentification d'application.

6. Procédé de gestion selon la revendication 4 ou 5, dans lequel le dispositif électronique (12A, 12B, 12C, 12D) comporte un processeur (20A, 20B, 20C) propre à exécuter une amorce, le procédé de gestion étant mis en oeuvre par l'amorce.

7. Procédé de gestion selon l'une quelconque des revendications 1 à 6, dans lequel l'installation de l'application (102) est refusée lorsqu'au moins l'un du certificat et de l'application (102) est considéré comme non authentique.

8. Procédé de génération d'un pack logiciel (100) comprenant les étapes de :
- fourniture d'une application (102) comprenant au moins un exécutable (110), d'une première clé privée (SFK) de cryptage, d'un certificat (104) comprenant des informations et d'au moins une deuxième clé privée de cryptage (SCKi), au moins une des deuxièmes clés privées de cryptage (SCK, SCKi) étant distincte de la première clé privée (SFK) de cryptage,
- génération d'une première signature (FWSC) d'authentification de l'application (102) à l'aide d'un codage asymétrique utilisant la première clé privée (SFK) de cryptage, et
- génération d'une deuxième signature (CSC) d'authentification du certificat (104), la deuxième signature étant un ensemble comprenant des deuxièmes sous-signatures (CSC, CSCi) d'authentification du certificat, l'étape de génération de la deuxième signature (CSC) comprenant l'obtention de chaque deuxième sous-signature (CSC, CSCi) par utilisation d'un codage asymétrique à l'aide d'une deuxième clé privée de cryptage respective (SCK, SCKi).

9. Produit programme d'ordinateur comportant des instructions logicielles qui, lorsque les instructions logicielles sont exécutées par un ordinateur mettent en oeuvre un procédé de génération selon la revendication 8

10. Dispositif électronique (12A, 12B, 12C, 12D) comportant une mémoire (18A, 18B, 18C, 18D) dans laquelle est mémorisée une clé publique d'authentification de certificat (C2) et une clé publique d'authentification d'application (C1), la clé publique d'authentification du certificat (C2) et la clé publique d'authentification d'application (C1) étant distinctes et un processeur (20A, 20B, 20C) configuré pour mettre en oeuvre les étapes de procédé selon l'une quelconque des revendications 1 à 8.

## Patentansprüche

1. Verfahren zum Steuern der Installation einer Software-Anwendung (102) in einer elektronischen Vorrichtung (12A, 12B, 12C, 12D), die einen Speicher (18A, 18B, 18C, 18D) enthält, in dem ein öffentlicher Schlüssel (C1) für die Authentifizierung der Anwendung und ein öffentlicher Schlüssel (C2) für die Authentifizierung eines Zertifikats gespeichert sind, wobei die Software-Installation einen Teil eines Software-Pakets (100) bildet, das Folgendes umfasst:
- die Anwendung (102), die wenigstens eine ausführbare Datei enthält,
- eine erste Signatur (FWSC) für die Authentifizierung der Anwendung (102), wobei die erste Signatur (FWSC) durch eine asymmetrische Codierung unter Verwendung eines ersten privaten Verschlüsselungsschlüssels (SFK) erhalten worden ist,
- ein Zertifikat (104), das Informationen enthält, und
- eine zweite Signatur (CSC) für die Authentifizierung des Zertifikats (104), wobei die zweite Signatur eine Gesamtheit ist, die zweite Untersignaturen (CSC, CSCi) für die Authentifizierung des Zertifikats enthält, wobei jede zweite Untersignatur (CSC, CSCi) durch eine asymmetrische Codierung unter Verwendung jeweils eines zweiten privaten Verschlüsselungsschlüssels (SCK, SCKi) erhalten wird, wobei wenigstens einer der zweiten privaten Verschlüsselungsschlüssel (SCK, SCKi) von dem ersten privaten Verschlüsselungsschlüssel (SFK) verschieden ist,
wobei das Verfahren das Prüfen der ersten Signatur (FWSC) für die Authentifizierung der Anwendung (102) mit Hilfe des öffentlichen Schlüssels (C1) für die Authentifizierung der Anwendung umfasst und:
- dann, wenn die erste Signatur (FWSC) als authentisch angesehen wird, das Installieren der Anwendung (102) umfasst oder
- dann, wenn die erste Signatur (FWSC) für die Authentifizierung der Anwendung als nicht authentisch angesehen wird, außerdem wenigstens Folgendes umfasst:
• Ermitteln der Echtheit der zweiten Signatur (CSC) für die Authentifizierung des Zertifikats mithilfe des öffentlichen Schlüssels (C2) für die Authentifizierung des Zertifikats, wobei das Zertifikat (104) authentifiziert wird, wenn wenigstens eine der zweiten Untersignaturen (CSC, CSCi) als authentisch angesehen wird, wenn der Ermittlungsschritt ausgeführt wird,
• Erneuern des öffentlichen Schlüssels (C1) für die Authentifizierung der Anwendung, wenn die zweite Signatur (CSC) für die Authentifizierung des Zertifikats als authentisch angesehen wird,
• Installieren der Anwendung (102), wenn mit Hilfe des öffentlichen Schlüssels für die Authentifizierung der Anwendung die erste Signatur (FWSC) für die Authentifizierung der Anwendung (102) als authentisch angesehen wird.

2. Steuerverfahren nach Anspruch 1, wobei wenigstens einer der zweiten privaten Verschlüsselungsschlüssel (SCK, SCKi) dem öffentlichen Schlüssel (C2) für die Authentifizierung des Zertifikats zugeordnet ist.

3. Steuerverfahren nach einem der Ansprüche 1 bis 2, wobei das Verfahren außerdem einen Schritt des Erneuerns des öffentlichen Schlüssels (C2) für die Authentifizierung des Zertifikats der elektronischen Vorrichtung (12A, 12B, 12C, 12D) umfasst.

4. Steuerverfahren nach Anspruch 3, wobei die Informationen des Zertifikats (104) einen ersten öffentlichen Schlüssel (FSPK), der dem ersten privaten Verschlüsselungsschlüssel (SFK) zugeordnet ist, enthält und die Anwendung (102) einen zweiten öffentlichen Schlüssel (FMPK), der einem zweiten privaten Verschlüsselungsschlüssel (SCK) zugeordnet ist, enthält, wobei der neue öffentliche Schlüssel für die Authentifizierung der Anwendung, der am Ende des Erneuerungsschrittes erhalten wird, der erste öffentliche Schlüssel (FSPK) ist und der neue öffentliche Schlüssel für die Authentifizierung des Zertifikats, der am Ende des Erneuerungsschlüssels erhalten wird, der zweite öffentliche Schlüssel (FMPK) ist.

5. Steuerverfahren nach Anspruch 4, wobei das Verfahren außerdem einen Schritt des Authentifizierens der Anwendung (102) durch Verifizieren der Echtheit der ersten Signatur (FWSC) mit Hilfe des neuen öffentlichen Schlüssels für die Authentifizierung der Anwendung umfasst.

6. Steuerverfahren nach Anspruch 4 oder 5, wobei die elektronische Vorrichtung (12A, 12B, 12C, 12D) einen Prozessor (20A, 20B, 20C) umfasst, der einen Bootstrap ausführen kann, wobei das Steuerverfahren durch den Bootstrap ausgeführt wird.

7. Steuerverfahren nach einem der Ansprüche 1 bis 6, wobei die Installation der Anwendung (102) verweigert wird, wenn das Zertifikat und/oder die Anwendung (102) als nicht authentisch angesehen werden.

8. Verfahren zum Erzeugen eines Software-Pakets (100), das die folgenden Schritte umfasst:
- Bereitstellen einer Anwendung (102), die wenigstens eine ausführbare Datei (110), wenigstens einen privaten Verschlüsselungsschlüssel (SFK), ein Zertifikat (104), das Informationen enthält, und wenigstens einen zweiten privaten Verschlüsselungsschlüssel (SCKi) enthält, wobei wenigstens einer der zweiten privaten Verschlüsselungsschlüssel (SCK, SCKi) von dem ersten privaten Verschlüsselungsschlüssel (SFK) verschieden ist,
- Erzeugen einer ersten Signatur (FWSC) für die Authentifizierung der Anwendung (102) mit Hilfe einer asymmetrischen Codierung unter Verwendung des ersten privaten Verschlüsselungsschlüssels (SFK), und
- Erzeugen einer zweiten Signatur (CSC) für die Authentifizierung des Zertifikats (104), wobei die zweite Signatur eine Gesamtheit ist, die zweite Untersignaturen (CSC, CSCi) für die Authentifizierung des Zertifikats enthält, wobei der Schritt des Erzeugens der zweiten Signatur (CSC) das Erhalten jeder zweiten Untersignatur (CSC, CSCi) durch Verwenden einer asymmetrischen Codierung mit Hilfe eines jeweiligen zweiten privaten Verschlüsselungsschlüssels (SCK, SCKi) umfasst.

9. Computerprogrammprodukt, das Software-Befehle enthält, die dann, wenn sie durch einen Computer ausgeführt werden, ein Erzeugungsverfahren nach Anspruch 8 ausführen.

10. Elektronische Vorrichtung (12A, 12B, 12C, 12D), die einen Speicher (18A, 18B, 18C, 18D) umfasst, in dem ein öffentlicher Schlüssel (C2) für die Authentifizierung des Zertifikats und ein öffentlicher Schlüssel (C1) für die Authentifizierung der Anwendung gespeichert sind, wobei der öffentliche Schlüssel (C2) für die Authentifizierung des Zertifikats und der öffentliche Schlüssel (C1) für die Authentifizierung der Anwendung verschieden sind, und einen Prozessor (20A, 20B, 20C) umfasst, der konfiguriert ist, die Schritte des Verfahrens nach einem der Ansprüche 1 bis 8 auszuführen.

## Claims

1. A method for managing the installation of a software application (102) on an electronic device (12A, 12B, 12C, 12D) comprising a memory (18A, 18B, 18C, 18D) in which a public application authentication key (C1) and a public certificate authentication key are stored (C2), the software application being part of a software pack (100) comprising:
- the application (102) comprising at least one executable,
- a first authentication signature (FWSC) of the application (102), the first signature (FWSC) having been obtained by asymmetrical encoding using a first private encryption key (SFK),
- a certificate (104) comprising information, and
- a second authentication signature (CSC) of the certificate (104), the second signature being a set comprising second sub-signatures (CSC, CSCi) for authentication of the certificate, each second sub-signature (CSC, CSCi) being obtained by asymmetrical encoding each using a respective second private encryption key (SCK, SCKi), at least one of the second private encryption keys (SCK, SCKi) being separate from the first private encryption key (SFK),
the method comprising testing the first authentication signature (FWSC) of the application authentication (102) using the public application authentication key (C1) and:
- installing the application (102) when the first signature (FWSC) is considered authentic, or
- when the first signature (FWSC) is not considered authentic, the method further comprises at least:
- seeking the authenticity of the second authentication signature (CSC) of the certificate using the public authentication key of the certificate (C2), the certificate (104) being authenticated if at least one of the second sub-signatures (CSC, CSCi) is considered authentic during implementation of the search step,
- renewing the public application authentication key (C1) of the first electronic device when the second authentication signature (CSC) of the certificate is considered authentic.
- installing the application (102), when, using the new public application authentication key, the first authentication signature (FWSC) of the application authentication (102) is considered authentic.

2. The management method according to claim 1, wherein at least one of the second private encryption keys (SCK, SCKi) is associated with the public authentication key of the certificate (C2).

3. The management method according to claim 1 to 2, wherein the method further comprises a step for renewing the public authentication key of the certificate (C2) of the electronic device (12A, 12B, 12C, 12D).

4. The management method according to claim 3, wherein the information of the certificate (104) comprises a first public key (FSPK) associated with the first private encryption key (SFK) and the application (102) comprises a second public key (FMPK) associated with a second private encryption key (SCK), the new public application authentication key obtained at the end of the renewal step being the first public key (FSPK) and the new public authentication key of the certificate obtained at the end of the renewal step being the second public key (FMPK).

5. The management method according to claim 4, wherein the method further comprises a step for authenticating the application (102) by verifying the authenticity of the first signature (FWSC) using the new public application authentication key.

6. The management method according to claim 4or 5, wherein the electronic device (12A, 12B, 12C, 12D) comprises a processor (20A, 20B, 20C) able to execute a boot, the management method being implemented by the boot.

7. The management method according to claim 1 to 6, wherein the installation of the application (102) is refused when at least one of the certificate and the application (102) is considered not authentic.

8. A method for generating a software pack (100), comprising the following steps:
- providing an application (102) comprising at least one executable (110), a first private encryption key (SFK), a certificate (104) comprising information and at least one second private encryption key (SCKi), at least one of the second private encryption keys (SCK, SCKi) being separate from the first private encryption key (SFK),
- generating a first authentication signature (FWSC) of the application using asymmetrical encoding using a first private encryption key (SFK), and
- generating a second authentication signature (CSC) of the certificate (104), the second signature being a set comprising second sub-signatures (CSC, CSCi) for authentication of the certificate, the step for generating the second signature (CSC) comprising obtaining each second sub-signature (CSC, CSCi) by asymmetrical encoding each using a respective second private encryption key (SCK, SCKi).

9. A computer program product comprising software instructions which, when the software instructions are executed by a computer, implement a generating method according to claim 8.

10. An electronic device (12A, 12B, 12C, 12D) comprising a memory (18A, 18B, 18C, 18D) in which a public certificate authentication key (C2) and a public application authentication key (C1) are stored, the public authentication key of the certificate and the public application authentication key being separate and a processor (20A, 20B, 20C) configured to perform the steps of the method according to any one of claims 1 to 8.
